(19) Europäisches Patentamt
European Patent Office
Office européen des brevets

(11) **EP 3 275 624 B1**

(12) **EUROPEAN PATENT SPECIFICATION**

(45) Date of publication and mention
of the grant of the patent:
**30.09.2020 Bulletin 2020/40**

(21) Application number: **16772471.5**

(22) Date of filing: **23.03.2016**

(51) Int Cl.:
**B29D 7/01** (2006.01)    **B29C 55/12** (2006.01)
**H01G 4/18** (2006.01)

(86) International application number:
**PCT/JP2016/059077**

(87) International publication number:
**WO 2016/158590 (06.10.2016 Gazette 2016/40)**

(54) **BIAXIALLY ORIENTED POLYPROPYLENE FILM FOR CAPACITOR, METAL LAMINATED FILM, AND FILM CAPACITOR**

BIAXIAL AUSGERICHTETE POLYPROPYLENFOLIE FÜR KONDENSATOR, METALLLAMINIERTE FOLIE UND FOLIENKONDENSATOR

FILM DE POLYPROPYLÈNE À ORIENTATION BIAXIALE POUR CONDENSATEUR, FILM MÉTALLIQUE STRATIFIÉ ET CONDENSATEUR À FILM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.03.2015 JP 2015066018**

(43) Date of publication of application:
**31.01.2018 Bulletin 2018/05**

(73) Proprietor: **Toray Industries, Inc.**
**Tokyo 103-8666 (JP)**

(72) Inventors:
• **FUJIMOTO, Soichi**
**Tsuchiura-shi**
**Ibaraki 300-0015 (JP)**
• **KUROUJI, Koji**
**Tsuchiura-shi**
**Ibaraki 300-0015 (JP)**
• **ASANO, Tetsuya**
**Tsuchiura-shi**
**Ibaraki 300-0015 (JP)**

(74) Representative: **Mewburn Ellis LLP**
**Aurora Building**
**Counterslip**
**Bristol BS1 6BX (GB)**

(56) References cited:
JP-A- H06 342 738    JP-A- H08 156 118
JP-A- H10 156 938    JP-A- S58 146 064
JP-A- 2001 106 804    JP-A- 2002 105 224
JP-A- 2008 133 446    JP-A- 2010 219 328
US-A- 3 309 452

**Description**

TECHNICAL FIELD

The present invention relates to a biaxially oriented polypropylene film suitable for industrial use and the like, and more particularly to a biaxially oriented polypropylene film for a capacitor which maintains stable and high transportability during transport of a thin film as a dielectric for a capacitor while exhibiting excellent productivity and workability.

BACKGROUND ART

Since a biaxially oriented polypropylene film has high transparency, and is excellent in mechanical characteristics and electric characteristics, it is used in various applications such as packaging applications, tape applications, and electric applications including cable lapping and capacitors.

Among these applications, a biaxially oriented polypropylene film is particularly preferably used in a high-voltage capacitor regardless of whether it is for a DC application or an AC application because of its excellent withstand voltage and low loss characteristics.

Recently, inverters are introduced into various electric facilities, and it is increasingly required to downsize capacitors as well as increase the capacitance of capacitors. In view of such a requirement from the market, particularly in automobile applications (including hybrid car applications), solar power generation, and wind power generation, it is becoming essential to improve the withstand voltage of a biaxially oriented polypropylene film, and to further reduce the film thickness and reduce the cost of the capacitor while maintaining the productivity and workability of the film.

In such a biaxially oriented polypropylene film, the surface has to be moderately roughened from the viewpoint of withstand voltage, productivity, and workability, and this is very important especially in terms of imparting slidability to the film. The slidability has a large influence on the workability of the film as well as finish and performance of the capacitor in a vapor deposition step of forming a metal evaporated film on the dielectric film to form an electrode, a slitting step of producing an evaporated reel, and an element winding step of producing a capacitor.

As a method for roughening the surface or imparting slidability to the film, there have been proposed mechanical methods such as embossing and sand blasting, chemical methods such as chemical etching using a solvent, a method of orienting a sheet made from a mixture of heterogeneous polymers such as polyethylene, a method of orienting a sheet including β crystals (for example, see Patent Documents 1 and 2), and the like.

In the mechanical and chemical methods, however, the film has low roughness density. In addition, in the method of orienting a sheet including β crystals, coarse protrusions are likely to be formed. Thus, these methods are not necessarily satisfactory particularly in terms of workability, that is, the slidability of the film. In addition, films roughened by any of these methods are poor in film transportability and winding property at the time of production of a capacitor, and it is difficult to appropriately adjust the amount of air between the film layers. In particular, in the case of an oil-impregnated capacitor, oil impregnation may become insufficient so that a partially unimpregnated portion tends to be formed, and the life of the capacitor may be shortened.

In addition, a biaxially oriented polypropylene film roughened by any of the above-mentioned methods may be insufficient in transportability, and may have problems also in terms of the winding property under conditions aiming at severe cost reduction in terms of workability and productivity of the capacitor.

As for the roughness density and the uniformity of protrusions, a high melt strength polypropylene film (see, for example, Patent Document 4) and a laminate film of such a high melt strength polypropylene film and an ordinary polypropylene film (see, for example, Patent Document 3) have been proposed. When a high melt strength polypropylene resin itself is used as a capacitor, however, it is impossible to obtain sufficient withstand voltage and heat resistance due to the structure of the resin, and the breakdown voltage particularly at high temperatures may lower remarkably. Further, in the technique of laminating a high melt strength polypropylene resin, it is actually very difficult to obtain a uniform lamination thickness configuration particularly in a thin film having a thickness of 3 $\mu$m or less, so that the uniformity is impaired and it becomes impossible to obtain a practically satisfactory dielectric film. In addition, Patent Document 4 discloses a biaxially oriented polypropylene film whose degree of surface roughness is controlled and a method for producing the same, but the method is insufficient and has difficulty in controlling the degree of surface roughness of the film and imparting slidability to the film.

In Patent Documents 5 and 6 in which the roughness of at least one film surface is defined, it is described that setting the β crystal fraction of the cast raw sheet within a certain range as a method of forming a finely roughened surface makes it possible to impart slidability to the film, and to balance the winding property and the withstand voltage of the element. However, this production method cannot sufficiently control the degree of surface roughness and slidability of both surfaces of the film. Besides, the obtained film does not sufficiently satisfy the severe withstand voltage, heat resistance, and workability especially required in automobile applications at the level of the fine surface roughness thereof.

In addition, Patent Documents 7 and 8 define the slidability of a film, but it is a biaxially oriented polyester film for a capacitor made from polyester, and this film is insufficient in terms of performance such as the breakdown voltage of the film and the withstand voltage of the capacitor. It has been still difficult to stretch the crystalline polymer, polypropylene, similarly to the polyester of these inventions. In addition, these films are not necessarily satisfactory since the surface is formed by adding external particles for roughening in order to impart slidability, which causes remarkable deterioration of the withstand voltage of the capacitor due to coarse protrusions and dropping of external particles. In order to further reduce the cost and improve workability in the production of a capacitor, further improvement in the transport stability and winding property is required of a capacitor in the context of speeding up and complication of process conditions. Patent Document 9 proposes a thermoplastic film and its process of manufacture. The film has webbed designs appearing on the surface thereof having over 0.03 micron surface roughness, the surface structure being different in quality from the interior structure and having a thickness under 5 microns.

PRIOR ART DOCUMENTS

Patent Document 1: JP-A-51-63500;
Patent Document 2: JP-A-2004-175932;
Patent Document 3: JP-A-2001-129944;
Patent Document 4: JP-A-2001-72778;
Patent Document 5: JP Patent No. 3508515
Patent Document 6: JP-A-2007-308604;
Patent Document 7: JP-A- 2008-030223;
Patent Document 8: JP-A-2000-25107; and Patent Document 9: US-A-3309452.

SUMMARY OF THE INVENTION

PROBLEMS TO BE SOLVED BY THE INVENTION

The present inventors made earnest investigations to solve the above-mentioned problems, and consequently completed the present invention. The present invention provides a biaxially oriented polypropylene film for a capacitor that exerts excellent withstand voltage in capacitor applications and ensures stable workability.

As used herein, the "workability" means the stability of the yield and steps in the steps of producing the capacitor from the film. Specific steps include a vapor deposition step of forming an electrode metal on a film, an evaporated reel slitting step of slitting the obtained evaporated roll to form a reel, and an element winding step of winding the evaporated reel, subjecting the reel to heat treatment and metal spraying treatment to form an electrode, and finally forming a capacitor.

Such a biaxially oriented polypropylene film for a capacitor is excellent in workability and withstand voltage suitable for capacitor applications. In particular, the provided biaxially oriented polypropylene film has slidability in a certain range in the longitudinal direction and the width direction.

SOLUTIONS TO THE PROBLEMS

In order to solve the above-mentioned problems, the present invention has the configuration defined in the accompanying claim 1.

(1) A biaxially oriented polypropylene film for a capacitor, in which $\mu$dm and $\mu$dt are each in the range of 0.60 - 1.70 and the value of the ratio ($\mu$dm/$\mu$dt) of $\mu$dm and $\mu$dt is 0.75 to less than 1.15, where $\mu$dm is the kinetic friction coefficient in a longitudinal direction and $\mu$dt is the kinetic friction coefficient in a width direction, and the film thickness measured by a micrometer method is in the range of 0.5 - 3 $\mu$m. The kinetic friction coefficients are measured in accordance with JIS-7125 (1999), as described later.

(2) The biaxially oriented polypropylene film for a capacitor according to (1), wherein $Y_{MD}$, $Y_{TD}$, and $Y_{45°}$ satisfy the following expressions (a) to (c), where $Y_{MD}$ is a Young's modulus in the film longitudinal direction, $Y_{TD}$ is a Young's modulus in the film width direction, and $Y_{45°}$ is a Young's modulus in a direction of 45° which is a bisector between the longitudinal direction and the width direction:

$$0.8 < Y_{MD}/Y_{TD} < 1.25 \quad ...(a)$$

$$0.8 < Y_{TD}/Y_{45°} < 1.25 \quad ...(b)$$

$$0.8 < Y_{45°}/Y_{MD} < 1.25 \quad ...(c).$$

(3) The biaxially oriented polypropylene film for a capacitor according to (1) or (2), wherein $Y_{45°}$ is 2.5 GPa or more and 5.0 GPa or less, where $Y_{45°}$ is a Young's modulus in a direction of 45° which is a bisector between the film longitudinal direction and the film width direction.

(4) The biaxially oriented polypropylene film for a capacitor according to any one of (1) to (3), containing a polypropylene having a meso-pentad fraction of 95% or more and 99% or less.

(5) The biaxially oriented polypropylene film for a capacitor according to any one of (1) to (4), having a center line surface roughness (SRa) of 10 nm or more and 40 nm or less in either surface.

(6) A metal laminated film including the biaxially oriented polypropylene film for a capacitor according to any one of (1) to (5), and a metal film provided on at least one surface of the biaxially oriented polypropylene film.

(7) The metal laminated film according to (6), wherein the metal film has a surface electric resistance value in a range of 1 to 20 $\Omega/\square$.

(8) A film capacitor including the metal laminated film according to (6) or (7).

EFFECTS OF THE INVENTION

According to the present invention, since the biaxially oriented polypropylene film has excellent workability, the film is excellent in working suitability even if it is thin, and it is possible to produce a high-quality capacitor. Since it is possible to provide a biaxially oriented polypropylene film for a capacitor that exerts excellent withstand voltage and reliability in a wide range of ambient temperature conditions, for example, from a low temperature (-40°C) to a high temperature (125°C), the film is suitable particularly for capacitor applications, preferably for capacitors for automobiles, solar power generation, and wind power generation.

EMBODIMENTS OF THE INVENTION

Hereinafter, the biaxially oriented polypropylene film for a capacitor, the metal laminated film, and the film capacitor of the present invention will be described.

The biaxially oriented polypropylene film for a capacitor of the present invention has a kinetic friction coefficient $\mu$dm and a kinetic friction coefficient $\mu$dt each in a range of 0.60 to 1.70 and a value of a ratio between the kinetic friction coefficient $\mu$dm and the kinetic friction coefficient $\mu$dt ($\mu$dm/$\mu$dt) of 0.75 or more and less than 1.15, where $\mu$dm is the kinetic friction coefficient in a film longitudinal direction (a direction in which the film moves during film formation) and $\mu$dt is the kinetic friction coefficient in a film width direction (a direction that is orthogonal to the longitudinal direction in the film plane).

$\mu$dm and $\mu$dt are more preferably 0.70 to 1.50, further preferably 0.75 to 1.30, particularly preferably 0.80 to 1.10. If either $\mu$dm or $\mu$dt is less than 0.60, the film is not brought into close contact with the cooling drum particularly during the vapor deposition, and the film is susceptible to thermal damage during the vapor deposition, so that heat deficiency defects tend to occur and the vapor deposition quality is lowered. Further, in the evaporated reel slitting step and the element winding step, the winding property is deteriorated, and the film is easy to slide to cause quality deterioration including meandering of the film, and misalignment and protrusion of the capacitor end face after winding, as well as deterioration of workability. This sometimes produces a defective product and tends to lower the productivity.

In addition, when either $\mu$dm or $\mu$dt exceeds 1.70, in the vapor deposition step, the slitting step, and the element winding step, the film is reduced in slidability and tends to be susceptible to defects such as scratches and wrinkles. In addition, when the film is made into a capacitor, the interlayer spacing is narrow, local interlayer adhesion occurs, and the self-healing property and the withstand voltage tend to deteriorate due to electric field concentration.

The ratio between the kinetic friction coefficient $\mu$dm and the kinetic friction coefficient $\mu$dt ($\mu$dm/$\mu$dt) is more preferably 0.80 to 1.10, further preferably 0.85 to 1.10, particularly preferably 0.90 to 1.10. When the value of the ratio between the kinetic friction coefficient $\mu$dm and the kinetic friction coefficient $\mu$dt ($\mu$dm/$\mu$dt) is less than 0.75, the degree of close contact to the cooling drum during the vapor deposition is uneven, wrinkles are likely to be formed when the film shrinks in the width direction, and defects such as film omission and heat deficiency tend to occur. Meanwhile, when the value of the ratio between the kinetic friction coefficient $\mu$dm and the kinetic friction coefficient $\mu$dt ($\mu$dm/$\mu$dt) is 1.15 or more, the film is likely to deviate in the film width direction when being brought into close contact with the cooling drum during the vapor deposition, sometimes resulting in defects such as margin variation. The margin accuracy is regarded as important particularly in the double-sided vapor deposition step, and the value of ($\mu$dm/$\mu$dt) in such a case is particularly preferably 0.90 or more and 1.10 or less. When the $\mu$dm/$\mu$dt is in the above-mentioned range, there are no defects such as margin variation during double-sided vapor deposition, and vapor deposition workability and the reel quality are remarkably improved so that the productivity is improved.

The technical background of the present invention will now be described. In order to improve the withstand voltage and reliability of the polypropylene film and workability (vapor deposition, slitting, and element winding) of the capacitor, it is very important to control the slidability of the polypropylene film focusing on the in-plane isotropy of the film. In particular, in order to improve the workability of the capacitor, it is important to moderately roughen the film surface to give appropriate slidability to the film, as well as give appropriate film transport stability, that is, ease of sliding between films or sliding of the film against the transfer roll. In the film plane, however, the slidability has been anisotropic, and the slidability has greatly varied particularly between the longitudinal direction and the width direction. As a result, local interlayer adhesion between films and uneven expression of residual stress have been observed in the case where the films are made into an element, and the polypropylene film has been unsatisfactory also from the viewpoint of the withstand voltage of the element.

For this reason, in the present invention, the slidability in the in-plane direction that cannot be expressed by the conventional surface roughness is adopted as a factor for evaluating isotropy. That is, controlling the slidability between the film and the transfer roll as well as between the films so as to be isotropic in the plane makes it possible to provide suitable finish, workability, and withstand voltage of the element. As described later, the magnitude of the values of kinetic friction coefficients $\mu$dm and $\mu$dt can be controlled by appropriately adjusting the cooling drum temperature, take-off speed, and stretching temperature, and $\mu$dm/$\mu$dt can be controlled by appropriately adjusting the stretching and heat treatment conditions.

Then, the film thickness of the biaxially oriented polypropylene film for a capacitor of the present invention will be described. The biaxially oriented polypropylene film for a capacitor of the present invention preferably has a film thickness measured by a micrometer method of 0.5 to 3 $\mu$m, more preferably 1 to 2.5 $\mu$m, particularly preferably 1.2 to 1.8 $\mu$m from the viewpoint of capacitor element size, film formation stability, and workability. If the film is too thin, the film may be poor in mechanical strength, breakdown strength, and workability. On the other hand, if the film is too thick, it becomes difficult to produce a compact capacitor. Moreover, when the film is used as a dielectric for a capacitor, the capacitance per volume tends to be small, the film surface is easily roughened, and the capacitor may be poor in the reliability and high-temperature withstand voltage.

In the film of the present invention, $Y_{MD}/Y_{TD}$, $Y_{TD}/Y_{45°}$, and $Y_{45°}/Y_{MD}$ are preferably all in the range of 0.8 to 1.25, where $Y_{MD}$ is a Young's modulus in the film longitudinal direction, $Y_{TD}$ is a Young's modulus in the film width direction, and $Y_{45°}$ is a Young's modulus in a direction of 45° which is a bisector between the longitudinal direction and the width direction. The values of $Y_{MD}/Y_{TD}$, $Y_{TD}/Y_{45°}$, and $Y_{45°}/Y_{MD}$ are more preferably 0.85 to 1.20, further preferably 0.9 to 1.15, particularly preferably 0.95 to 1.10. It becomes possible to obtain a suitable withstand voltage of an element by employing the Young's modulus in the in-plane direction, which cannot be expressed by the conventional Young's modulus, as an object to be isotropically controlled. Further, the Young's modulus $Y_{MD}$ in the longitudinal direction is preferably 2.5 GPa or more and 5 GPa or less. If the Young's modulus $Y_{MD}$ in the longitudinal direction exceeds 5 GPa, in a thin film having a thickness of 0.5 to 3 $\mu$m, the film may become difficult to stretch and wrinkles may be formed in stretching due to the circumferential speed difference between rolls in the transport step. If the Young's modulus $Y_{MD}$ in the longitudinal direction is less than 2.5 GPa, the withstand voltage and heat resistance, in particular the reliability of the capacitor at high temperatures may deteriorate. Therefore, the Young's modulus $Y_{MD}$ in the longitudinal direction is preferably 2.5 GPa or more and 5 GPa or less, more preferably 3 GPa or more and 4.5 GPa or less, particularly preferably 3.5 GPa or more and 4 GPa or less. Further, $Y_{45°}$ is preferably 2.5 GPa or more and 5.0 GPa or less, where $Y_{45°}$ is a Young's modulus in a direction of 45° which is a bisector between the film longitudinal direction and the film width direction. If $Y_{45°}$ exceeds 5.0 GPa, in a thin film having a thickness of 0.5 to 3 $\mu$m, the film may become difficult to stretch and wrinkles may be formed in stretching due to the circumferential speed difference between rolls in the transport step. If $Y_{45°}$ is less than 2.5 GPa, the withstand voltage and heat resistance, in particular the reliability of the capacitor at high temperatures may deteriorate. Therefore, $Y_{45°}$ is preferably 2.5 GPa or more and 5.0 GPa or less, more preferably 3 GPa or more and 4.5 GPa or less, particularly preferably 3.5 GPa or more and 4 GPa or less.

The values of $Y_{MD}/Y_{TD}$, $Y_{TD}/Y_{45°}$, and $Y_{45°}/Y_{MD}$ can be controlled by appropriately adjusting the stretching and heat treatment conditions. Specifically, $Y_{MD}$ can be increased by increasing the longitudinal stretch ratio and/or decreasing the longitudinal stretching temperature, and $Y_{TD}$ can be increased by increasing the transverse stretch ratio and/or decreasing the transverse stretching temperature. $Y_{45°}$ can be increased by setting the ratio between the longitudinal stretch ratio and the transverse stretch ratio close to 1. Combination of such adjustments makes it possible to control the values of $Y_{MD}/Y_{TD}$, $Y_{TD}/Y_{45°}$, and $Y_{45°}/Y_{MD}$ within the intended ranges. Furthermore, in order to control the relationship among Young's moduli within the above-mentioned ranges by increasing the longitudinal stretch ratio, it is preferred to perform multi-stage stretching in the longitudinal direction under specific stretching conditions as described later.

Further, the film of the present invention preferably contains a polypropylene having a meso-pentad fraction of 95% or more and 99% or less. If the meso-pentad fraction exceeds 99%, the productivity may lower in a thin film having a thickness of 0.5 to 3 $\mu$m. In addition, the crystallinity of the film tends to be high to deteriorate the plane orientation of the amorphous part, and the withstand voltage at room temperature may deteriorate. If the meso-pentad fraction is less than 95%, the withstand voltage and heat resistance, in particular the reliability of the capacitor at high temperatures may deteriorate. Therefore, the meso-pentad fraction of the polypropylene is preferably 95% or more and 99% or less, more preferably 97.5% or more and 98.5% or less, particularly preferably 98.0% or more and 98.5% or less. This makes it possible to provide a film excellent in withstand voltage characteristic, heat resistance, and reliability as a capacitor. In order to obtain a resin having high stereoregularity as described above, for example, a method of washing the obtained resin powder with a solvent such as n-heptane, and a method of appropriately selecting a catalyst and/or a cocatalyst or composition is preferably adopted. The meso-pentad fraction is an index of stereoregularity of a crystal phase of a polypropylene measured by a nuclear magnetic resonance method (NMR method), and a polypropylene having a higher meso-pentad fraction is preferred because it has higher degree of crystallinity, higher melting point, and higher breakdown voltage at high temperatures. The content of the polypropylene having the above-mentioned meso-pentad fraction in the film is preferably 70% by mass or more, more preferably 80% by mass or more, further preferably 99% by mass or more.

In the biaxially oriented polypropylene film for a capacitor according to the present invention, for the purpose of further improving the workability of the capacitor, it is preferred that the surface of the film be moderately roughened in order to appropriately adjust the uniformity of the interlayer spacing between films and ease of sliding between films or between the film and the transfer roll. Therefore, it is preferred that the center line average roughness (SRa, according to JIS B-0601: 1982) of either surface be 10 nm or more and 40 nm or less. If the center line average roughness (SRa) of either surface exceeds 40 nm, air may easily enter between the layers when films are laminated, which may lead to deterioration of the capacitor element. In addition, when a metal layer is formed on the film, holes or the like are formed in the metal layer. Thus, the breakdown voltage at high temperatures, the life of the capacitor, and the reliability may be deteriorated, or the charge is concentrated at the time of voltage application, which may easily cause insulation defects. On the other hand, if the SRa of either surface is less than 10 nm, the slidability of the film may be deteriorated, the film may be poor in handleability, wrinkles are likely to be formed, and a large capacitance change may occur due to the influence of wrinkles or the like at the time of continuous use of the capacitor. Therefore, the center line average surface roughness (SRa) of both surfaces of the film is preferably 10 nm or more and 40 nm or less, more preferably 15 to 35 nm, particularly preferably 20 to 30 nm. This makes it possible to further improve the winding property in the capacitor element step and the capacitance change when the film is formed into a capacitor, and it is possible to obtain a film excellent in workability and capacitor characteristics. The center line average surface roughness (SRa) of both surfaces of the film can be controlled by appropriately adjusting the cooling drum temperature, take-off speed, and stretching conditions. Specifically, the center line average surface roughness (SRa) of both surfaces of the film can be increased by increasing the cooling drum temperature, take-off speed, and longitudinal stretching temperature.

As described above, the film of the present invention is excellent in withstand voltage and workability, and has a characteristic sliding behavior in which the slidability in the longitudinal direction and the width direction, and the balance between the longitudinal direction and the width direction are controlled. In addition, if appropriate slidability is imparted to a biaxially oriented polypropylene film as described above, the film has few defects during the vapor deposition, no wrinkle is formed during the element processing, and a moderate clearance is maintained between film layers to provide a good self-healing property. Thus, it is possible to further maintain the life of the capacitor without causing short-circuit breakage, and to impart to the capacitor an excellent function of stably exhibiting security.

As the polypropylene contained in the biaxially oriented polypropylene film for a capacitor of the present invention, a polypropylene containing 4% by mass or less of a cold xylene soluble component (hereinafter referred to as CXS) is preferred. If the content of the CXS exceeds 4% by mass, the film is sometimes poor in the film formation stability, and voids may be formed in the film during production of a biaxially oriented film, and consequently the dimensional stability and withstand voltage may largely deteriorate.

Herein, the "cold xylene soluble component (CXS)" refers to a polypropylene component dissolved in xylene that is obtained by completely dissolving a film in xylene at 135°C and then precipitating the resultant at 20°C, and this component is thought to correspond to a component which is hardly crystallized because of low stereoregularity or a low molecular weight. When the resin contains a large amount of such a component, the film may have problems that the film is poor in the thermal dimensional stability or lowered in the breakdown voltage at high temperatures. Accordingly, the CXS is preferably 4% by mass or less, more preferably 3% by mass or less, particularly preferably 2% by mass or less. For obtaining a polypropylene having such a CXS, it is possible to employ, for example, a method of enhancing the catalyst activity in obtaining a resin, or a method of washing the obtained resin with a solvent or a propylene monomer itself.

Such a polypropylene is more preferably one having a melt flow rate (MFR) of 1 to 10 g/10 min (230°C, load of 21.18 N), particularly preferably one having an MFR of 2 to 5 g/10 min (230°C, load of 21.18 N) from the viewpoint of film forming property and withstand voltage. In order to set the melt flow rate (MFR) to a value within the above-mentioned range, a method of controlling the average molecular weight or molecular weight distribution is employed.

Such a polypropylene is mainly made of a homopolymer of propylene, but the polypropylene may contain a copolymerizing component based on another unsaturated hydrocarbon, or may be blended with a polymer that is not a homopolymer of propylene as long as the object of the present invention is not impaired. Examples of monomer components constituting such a copolymerizing component or blended polymer include ethylene, propylene (in the case of a copolymerized blend), 1-butene, 1-pentene, 3-methylpentene-1, 3-methylbutene-1, 1-hexene, 4-methylpentene-1, 5-ethylhexene-1, 1-octene, 1-decene, 1-dodecene, vinylcyclohexane, styrene, allylbenzene, cyclopentene, norbornene, and 5-methyl-2-norbornene. As for the amount of copolymerization or the blend, it is preferred that the former be less than 1 mol% and the latter be less than 20% by mass from the viewpoint of dielectric breakdown resistance and dimensional stability.

Further, such a polypropylene may contain various additives such as a crystal nucleating agent, an antioxidant, a heat stabilizer, a sliding agent, an antistatic agent, an antiblocking agent, a filler, a viscosity adjustor, and a coloring inhibitor as long as the object of the present invention is not impaired.

Among these additives, selection of the type and addition amount of the antioxidant are important from the viewpoint of long-term withstand voltage. That is, the antioxidant is preferably phenolic compounds having steric hindrance, and at least one of the compounds is of a high molecular weight type and has a molecular weight of 500 or more. Specific examples thereof include various antioxidants, and it is preferred to use, for example, 2,6-di-t-butyl-p-cresol (BHT: molecular weight 220.4) in combination with 1,3,5-trimethyl-2,4,6-tris(3,5-di-t-butyl-4-hydroxybenzyl)benzene (e.g., Irganox (registered trademark) 1330 manufactured by BASF Japan Ltd.: molecular weight 775.2) or tetrakis[methylene-3(3,5-di-t-butyl-4-hydroxyphenyl)propionate]methane (e.g., Irganox 1010 manufactured by BASF Japan Ltd.: molecular weight 1177.7). The total content of these antioxidants is preferably in the range of 0.03 to 1.0% by mass based on the total amount of the polypropylene. If the amount of the antioxidant is too small, the film may be poor in the long-term withstand voltage. If the amount of the antioxidant is too large, the capacitor element may be adversely affected due to blocking at high temperatures resulting from bleeding out of the antioxidant. The content is more preferably 0.1 to 0.9% by mass, particularly preferably 0.2 to 0.8% by mass.

The biaxially oriented polypropylene film of the present invention may contain a branched-chain polypropylene (H) from the viewpoint of high voltage property. When the biaxially oriented polypropylene film contains the branched-chain polypropylene (H), the content thereof is preferably 0.05 to 10% by mass, more preferably 0.5 to 8% by mass, further preferably 1 to 5% by mass. When the biaxially oriented polypropylene film contains the branched-chain polypropylene (H), the size of the spherocrystal produced in the step of cooling the melt-extruded resin sheet can easily be controlled to be small, the generation of insulation defects in the stretching step can be reduced, and the obtained polypropylene film is excellent in the withstand voltage and slidability.

The film of the present invention may be made from a mixture of the branched-chain polypropylene (H) and a polypropylene other than the branched-chain polypropylene (H), and the polypropylene other than the branched-chain polypropylene (H) is preferably a linear polypropylene.

In addition, it is particularly preferred that the branched-chain polypropylene (H) satisfy the following relational expression between the melt strength (MS) and the melt flow rate (MFR) measured at 230°C: log (MS) > -0.56 log (MFR) + 0.74.

In order to obtain a branched-chain polypropylene (H) that satisfies the relational expression between the melt strength (MS) and the melt flow rate (MFR) measured at 230°C: log (MS) > -0.56 log (MFR) + 0.74, the following methods are preferably employed: a method of blending a polypropylene containing a large amount of high molecular weight component, a method of blending an oligomer or a polymer having a branched structure (a method of introducing a long-chain branched structure into a polypropylene molecule as disclosed in Japanese Patent Laid-open Publication No. 62-121704), and the method as described in Japanese Patent No. 2869606.

The melt strength measured at 230°C is measured in accordance with the melt flow rate (MFR) measurement according to JIS-K7210 (1999). Specifically, the melt strength (unit: cN) is measured with use of a melt tension tester manufactured by Toyo Seiki Co., Ltd. by heating a polypropylene to 230°C, discharging the molten polypropylene at an extrusion speed of 15 mm/min to form a strand, and measuring the tension when this strand is taken off at a speed of 6.4 m/min. Further, the melt flow rate (MFR) measured at 230°C is a value (unit: g/10 min) measured under a load of 21.18 N according to JIS-K7210 (1999) .

The branched-chain polypropylene (H) preferably satisfies the above-mentioned expression, but is not particularly limited. From the viewpoint of film forming property, a branched-chain polypropylene (H) having a melt flow rate (MFR) in the range of 1 to 20 g/10 min is preferred, and one having an MFR in the range of 1 to 10 g/10 min is more preferred. The melt strength is preferably in the range of 1 to 30 cN, more preferably in the range of 2 to 20 cN. As used herein, the "branched-chain polypropylene (H)" is a polypropylene having 5 or less internal trisubstituted olefins per 10,000 carbon atoms. The presence of this internal trisubstituted olefin can be confirmed by the proton ratio in the $^1$H-NMR spectrum.

In the present invention, the polypropylene may contain a crystal nucleating agent as long as it is not contrary to the object of the present invention. As already described, the branched-chain polypropylene (H) itself already has an α- or β-crystal nucleating agent effect, however, different types of nucleating agents, such as α-crystal nucleating agents (e.g., dibenzylidene sorbitol and sodium benzoate) and β-crystal nucleating agents (e.g., amide compounds such as potassium 1,2-hydroxystearate, magnesium benzoate, and N,N'-dicyclohexyl-2,6-naphthalenedicarboxamide, and quinacridone compounds) can also be mentioned. However, excessive addition of the above-mentioned different types of nucleating agents sometimes causes deterioration of stretchability and lowering of withstand voltage due to void formation or the like. Thus, the content of the nucleating agent is usually 0.5% by mass or less, preferably 0.1% by mass or less, further preferably 0.05% by mass or less.

The biaxially oriented polypropylene film of the present invention is preferably used as a dielectric film for a capacitor, but it is not limited to a capacitor type film. Specifically, the polypropylene film may be used in either of a foil-wound capacitor and a metal evaporated film capacitor from the viewpoint of electrode configuration, and is also preferably used in an oil-impregnated capacitor impregnated with an insulating oil or a dry capacitor that does not contain an insulating oil at all. Further, the form of the capacitor may be a wound type or a laminated type. The polypropylene film of the present invention, however, is particularly preferably used as a metal evaporated film capacitor in view of the film characteristics.

A polypropylene film is generally low in surface energy, and is difficult to be stably subjected to metal vapor deposition. Therefore, it is preferred to surface-treat the polypropylene film before vapor deposition for the purpose of improving the adhesion force to the metal. Specific examples of the surface treatment include corona discharge treatment, plasma treatment, glow treatment, and flame treatment. While the surface wet tension of a polypropylene film is generally about 30 mN/m, it is preferred to increase the wet tension of a polypropylene film to 37 to 50 mN/m, preferably to about 39 to 48 mN/m by the surface treatment because adhesion to a metal film and security are improved.

The biaxially oriented polypropylene film for a capacitor of the present invention is obtained by using raw materials which can impart the above-mentioned properties, adjusting the surface roughness, adjusting the stretching/heat treatment conditions appropriately, and biaxially stretching the film. The magnitude of the values of kinetic friction coefficients $\mu$dm and $\mu$dt can be controlled by appropriately adjusting the cooling drum temperature, take-off speed, and stretching temperature, and $\mu$dm/$\mu$dt can be controlled by appropriately adjusting the stretching and heat treatment conditions. Specifically, it is preferred to appropriately increase the cooling drum temperature, take-off speed, and longitudinal stretching temperature in order to reduce the values of the kinetic friction coefficients $\mu$dm and $\mu$dt. It is possible to increase the value of $\mu$dm/$\mu$dt by increasing the longitudinal stretch ratio and decreasing the transverse stretch ratio.

As a method of biaxial stretching, any of inflation simultaneous biaxial stretching, tenter simultaneous biaxial stretching, and tenter sequential biaxial stretching may be employed. Among these methods, tenter sequential biaxial stretching is preferably employed from the viewpoint of controlling the isotropy of the film physical properties, such as the film formation stability, stretchability, strength, and slidability.

Then, a method for producing the biaxially oriented polypropylene film for a capacitor of the present invention will be described below, but the method is not necessarily limited thereto.

First, a polypropylene is melt-extruded, passed through a filtration filter, extruded from a slit-shaped die at a temperature of 235 to 255°C, and solidified on a cooling drum to give an unoriented sheet. Herein, in order to obtain the film of the present invention, it is preferred to appropriately control the temperature of the cooling drum for the purpose of appropriately producing the β crystals. In order to efficiently produce the β crystals, it is preferred to maintain the resin temperature at which the β crystal production efficiency reaches the maximum for a predetermined time, and the temperature is usually 115 to 135°C. The holding time is preferably 1 second or more. In order to realize these conditions, the process can be determined as appropriate in accordance with the resin temperature, the extrusion amount, the take-off speed, and the like. Since the diameter of the cooling drum largely affects the holding time, from the viewpoint of productivity, the diameter of the drum is preferably at least 1 m. Further, although the temperature of the cooling drum to be selected is arbitrary to some extent since it is affected by other factors as described above, it is preferably 80 to 120°C, more preferably 80 to 110°C, particularly preferably in the range of 85 to 100°C. If the temperature of the cooling drum is too high, crystallization of the film proceeds too much. Thus, the film may become hard to stretch in the subsequent step, voids may be formed in the film, and the film may be poor in dielectric breakdown resistance. As a method for bringing the film into close contact with the cooling drum, any technique such as an electrostatic application method, an adhesion method using the surface tension of water, an air knife method, a press roll method, and an underwater cast method may be used. It is preferred to use an air knife method which can impart good planarity and can control thermal shrinkage characteristics and surface roughness of the front and back surfaces of the film.

The air temperature of the air knife is preferably 35 to 120°C, more preferably 40 to 110°C, particularly preferably in the range of 45 to 100°C. If the air temperature of the air knife is too high, crystallization of the film proceeds too much. Thus, the film may become hard to stretch in the subsequent step, voids may be formed in the film, and the film may be poor in dielectric breakdown resistance. On the other hand, if the air temperature of the air knife is too low, the crystals are insufficiently formed, and it may be difficult to obtain the intended thermal shrinkage stress, degree of surface roughness, and slidability.

The blowing air speed of the air knife is preferably 130 to 150 m/s, and it is preferred that the internal structure of the air knife have a double pipe structure in order to improve the uniformity of the film in the width direction. If the air speed is less than 130 m/s, the film cannot be adequately brought into close contact with the cooling drum, and the film forming property deteriorates. If the air speed exceeds 150 m/s, the film cannot be uniformly brought into close contact with the cooling drum, and defects such as the film forming property, quality unevenness, and thickness unevenness are likely to occur. In addition, in order not to cause vibration of the film, it is preferred to adjust the position of the air knife so that air flows to the downstream side of the film formation.

Then, the unoriented film is biaxially stretched for biaxial orientation. It is preferred to preheat the unstretched film by passing the film between rolls kept at 120 to 145°C, and subsequently passing the sheet between rolls having a circumferential speed difference and maintained at a temperature of 130°C to 148°C to stretch the film. Further, productivity is improved by supplementing the whole or part of the film with heat at an output of 1 to 15 kW with a radiant heater in the stretching part. The stretch ratio is not particularly limited, and is appropriately selected according to the characteristics of the used polymer. A preferred stretch ratio is 5 to 11 times, and it is more preferably 6 to 9 times both in the film longitudinal direction and the film width direction. After biaxial stretching, the film may be re-stretched in the longitudinal direction or the width direction of the film, or in the longitudinal direction and the width direction of the film. In particular, in order to set the kinetic friction coefficients within the above-mentioned range of the present invention, the total stretch ratio in the longitudinal direction of the film is preferably 0.7 to 1.0 times, more preferably 0.8 to 1.0 times the total stretch ratio in the width direction of the film. Moreover, it is preferred to re-stretch the film 1.03 to 1.50 times in the longitudinal direction or the width direction of the film, or both in the longitudinal direction and the width direction of the film. In particular, it is essential to stretch the film in the longitudinal direction up to the total stretch ratio of 0.7 to 1.0 times the total stretch ratio in the width direction by sequential biaxial stretching, and thereby it is possible to set the kinetic friction coefficients within the above-mentioned range of the present invention. In this case, the method of stretching the film in the longitudinal direction is not particularly limited, but a multi-stage stretching method by which the film is stretched stepwise is preferred from the viewpoint of productivity, workability, and quality. The multi-stage stretching is a method of stretching a film not at once but stepwise in two or more stages (a step having two or more stretching sections). Second or later stretching is performed after the first stretching, whereby it is possible to easily increase the total stretch ratio in the longitudinal direction to the intended ratio, and stretching at a high total stretch ratio such as 6 to 11 times can be stably achieved. Performing the longitudinal stretching step by multi-stage stretching in this manner enhances the orientation of the film in the longitudinal direction after longitudinal uniaxial stretching, and maintains the longitudinal orientation even after the subsequent transverse stretching step, and thus, it becomes easy to control $\mu dm/\mu dt$ within the preferred range of the present invention. As a method of performing the multi-stage stretching in the longitudinal direction, it is preferred to perform the second stretching immediately after the first stretching. It may be difficult to stretch the film stretched once in the width direction secondly in the longitudinal direction. If the stretch ratio of the first stretching is 4.0 to 6.5 times, the stretch ratio becomes stable in the second and subsequent stretching, and the productivity is further improved. Then, the stretched film is subsequently guided to a tenter and stretched 5 to 11 times in the width direction at a temperature of 130 to 160°C.

In the case of re-longitudinal stretching, it is preferred to stretch the film at a stretching speed of 100%/min to 1,500, 000%/min, and it is more preferred to stretch the film at 200%/min to 150,000%/min by passing the film between rolls having a circumferential speed difference and maintained at a temperature of 130°C to 160°C.

In the case of re-transverse stretching, it is preferred to stretch the film at a stretching speed of 50%/min to 15,000%/min, more preferably 100%/min to 7,500%/min at a temperature of 130°C to 160°C.

The total stretch ratio (so-called area ratio) obtained as a result of stretching the film as described above is preferably 40 to 100 times, more preferably 40 to 90 times, further preferably 45 to 80 times, particularly preferably 45 to 75 times from the viewpoint of compatibility between the stable film forming property and capacitor characteristics. If the area ratio exceeds 100 times, film rupture may occur in the stretching step. On the other hand, if the area ratio is less than 40 times, the film may be poor in the capacitor characteristics.

Further, in the present invention, it is preferred to heat-treat the biaxially stretched film. From the viewpoint of improving the withstand voltage, the heat treatment temperature of the film is preferably in the range of 130°C to 160°C, and the heat treatment is preferably performed for 2 to 10 seconds. More preferably, the withstand voltage is improved by performing the heat treatment for 2 to 4 seconds. Following the heat treatment, relaxation treatment is performed preferably in the range of 1 to 20%, more preferably in the range of 3 to 15%, whereby the thermal shrinkage behavior of the film is controlled, and the withstand voltage and workability of the film are improved. The polypropylene film obtained by the heat treatment is cooled in the cooling step at a cooling temperature in the range of 50°C to 150°C for 1 to 5 seconds, whereby the withstand voltage is improved. Further, it is also a preferred method to cool the film once to about room temperature and then age the film at a temperature in the range of 40 to 70°C for about 5 seconds to 1 week. The aging can further improve the withstand voltage. When a metal film is provided on the surface of the polypropylene film, the polypropylene film may be subjected to the aging after the metal film is provided.

A surface of the film to be subjected to vapor deposition is preferably subjected to corona discharge treatment in the air, nitrogen, carbon dioxide, or a gas mixture of these before the film is wound in order to enhance adhesion of the evaporated metal.

In the present invention, the method of providing a metal film on the surface of the above-mentioned biaxially oriented polypropylene film for a capacitor to form a metal laminated film is not particularly limited. For example, it is preferred to employ a method of depositing aluminum on at least one surface of a polypropylene film to form a metal film that serves as an internal electrode of a film capacitor, such as an aluminum evaporated film. In this case, other metal components such as nickel, copper, gold, silver, chromium, and zinc may be deposited simultaneously with aluminum or sequentially. A protective layer may be formed using an oil or the like on the evaporated film.

The thickness of the metal film is preferably in the range of 20 to 100 nm from the viewpoint of the electric characteristics and the self-healing property of the film capacitor. For the same reason, the surface electric resistance value of the metal film is preferably in the range of 1 to 20 $\Omega/\square$. The surface electric resistance value can be controlled by the type of metal used and the film thickness. A method of measuring the surface electric resistance value will be described later.

In the present invention, after a metal film is formed, the metal laminated film may be subjected to aging treatment or heat treatment at a specific temperature as required. Further, at least one surface of the metal laminated film may be coated with polyphenylene oxide or the like for the purpose of insulation or the like.

The metal laminated film thus obtained can be laminated or wound by various methods to form a film capacitor. An example of a preferred production method of a wound film capacitor is as follows.

Aluminum is vacuum-deposited on one surface of a polypropylene film. In the vacuum deposition, aluminum is vapor-deposited in a stripe pattern having margins running in the film longitudinal direction. Then, slits are made with an edge in the center of each aluminum deposited portion and the center of each margin on the surface to prepare a tape-shaped winding reel having margins in one surface. Two tape-shaped winding reels each having margins on a left side or a right side are overlaid so that the aluminum deposited portion is protruded from the margin in the width direction, and wound to give a wound body. A core material is removed from the wound body, and the wound body is pressed. The wound body is subjected to metal spraying at both end surfaces to form an external electrode, and a lead wire is welded to the metal-sprayed parts to give a wound film capacitor. The film capacitor is used in wide applications, for example, railway vehicles, general home electronics (televisions and refrigerators), automobiles (including hybrid cars and electric vehicles), and wind power generation and solar power generation. The film capacitor of the present invention can also be suitably used in these applications.

EXAMPLES

Measurement methods of characteristic values in the present invention, and the methods for evaluating the effects are as follows.

(1) Kinetic friction coefficient ($\mu$dm) in longitudinal direction and kinetic friction coefficient ($\mu$dt) in width direction

Except for the contact area at the time of application of a load and the direction of measurement, the values are measured in accordance with JIS-K7125 (1999). The details are as follows.

A slip coefficient is obtained from the frictional force observed when a film is slid in the following manner.

<Preparation of Sample>

For the kinetic friction coefficient ($\mu$dm) in the longitudinal direction, a sample is cut into a size of a measuring direction (longitudinal direction): 200 mm and a direction perpendicular to the measuring direction: 80 mm. For the kinetic friction coefficient ($\mu$dt) in the width direction, a sample is cut into a size of a measuring direction (width direction): 200 mm and a direction perpendicular to the measuring direction: 80 mm. The film samples are subjected to humidity conditioning in an atmosphere of 23°C and a relative humidity of 65% for 24 hours or more.

<Measurement of Frictional Force>

Then, the two samples are superposed (the samples are superposed with a surface of one sample and a surface of the other surface being brought into contact with each other), a load (a square having a mass of 200 g and a bottom area of 50 mm $\times$ 50 mm) is placed thereon, and the frictional force when one of the films is taken off (take-off speed: 100 mm/min) in the measuring direction of the strip is measured. The frictional force is classified into a static frictional force observed at the critical point at which the film begins to slide and a dynamic frictional force observed during the takeoff. Each frictional force R (g) is read from the chart, and is regarded as the slip coefficient = R (g)/200 (g). This measurement is repeated 3 times, and the average value is obtained.

(2) Film thickness ($\mu$m)

According to JIS C-2330 (2001) 7.4.1.1, the micrometer method thickness was measured.

(3) Young's modulus in longitudinal direction ($Y_{MD}$), Young's modulus in width direction ($Y_{TD}$), and Young's modulus in oblique direction ($Y_{45°}$) which is intermediate angle between longitudinal direction and width direction

The Young's modulus was measured at 23°C and 65% RH using a film strength-elongation measuring instrument (AMF/RTA-100) manufactured by ORIENTEC CORPORATION. The sample was cut into a size of a measuring direction (longitudinal direction or width direction) : 25 cm and a direction perpendicular to the measuring direction: 1 cm, and extended from an original length of 100 mm at a pulling rate of 300 mm/min. The Young's modulus was measured according to the method defined in JIS-Z1702 (1994).

(4) Meso-pentad fraction (mmmm)

A specimen was dissolved in a solvent and the meso-pentad fraction (mmmm) was determined using $^{13}$C-NMR under the following conditions (reference: Polymer Analysis Handbook, new edition, edited by Polymer Analysis & Characterization, THE JAPAN SOCIETY FOR ANALYTICAL CHEMISTRY, 1995, pp. 609 to 611).

A. Measurement conditions

Apparatus: DRX-500 manufactured by Bruker Corporation
Measurement nucleus: $^{13}$C nucleus (resonance frequency: 125.8 MHz)
Measurement concentration: 10 wt%
Solvent: benzene/deuterated ortho-dichlorobenzene = 1 : 3 mixed solution (mass ratio)
Measurement temperature: 130°C
Spin rotation number: 12 Hz
NMR specimen tube: 5 mm tube
Pulse width: 45° (4.5 $\mu$s)
Pulse repetition period: 10 seconds
Data point: 64K
Number of conversions: 10,000 times
Measurement mode: complete decoupling

B. Analysis conditions

Fourier transformation was performed with an LB (line broadening factor) of 1.0, and the mmmm peak was set to 21.86 ppm. Using WINFIT software (manufactured by Bruker Corporation), peak splitting was carried out. The peak splitting was carried out from a peak on high magnetic field in the following manner, and automatic fitting of the attached software was carried out to perform the optimization of peak splitting. The total of peak fractions of mmmm was taken as the meso-pentad fraction (mmmm).
Measurement was carried out 5 times, and the average value thereof was taken as the meso-pentad fraction.

Peaks

(a) mrrm
(b), (c) rrrm (split as two peaks)
(d) rrrr
(e) mrmr
(f) mrmm + rmrr
(g) mmrr
(h) rmmr
(i) mmmr
(j) mmmm

(5) Number of internal trisubstituted olefins

The specimen was dissolved in a solvent and the number of internal trisubstituted olefins was determined using $^1$H-NMR under the following conditions.

A. Measurement conditions

Apparatus: ECX400P type nuclear magnetic resonance apparatus manufactured by JEOL Ltd.
Measurement nucleus: $^1$H nucleus (resonance frequency: 500 MHz)
Measurement concentration: 2 wt%
Solvent: deuterated ortho-dichlorobenzene Measurement temperature: 120°C
Pulse width: 45°
Pulse repetition period: 7 seconds
Number of conversions: 512 times
Measurement mode: non decoupling

B. Analysis conditions

Using the chemical shift of ortho-dichlorobenzene: 7.10 ppm as a standard, the signal in the region of 5.0 to 5.2 ppm was assigned to the proton of the internal trisubstituted olefin, and the proton ratio of the internal trisubstituted olefin was determined from the integral ratio with the broad signal in the range of 0.5 to 2.0 ppm.

(6) Center line surface roughness (SRa)

The center line surface roughness was measured according to JIS B-0601 (1982) using "Non-contact three-dimensional micro shape measurement instrument (ET-30HK)" and "three-dimensional roughness analyzer (MODEL SPA-11)" manufactured by Kosaka Laboratory Ltd. A dedicated sample holder was used for film measurement. The sample holder was removable two metal plates with a circular hole in the center. The sample was sandwiched between the plates, the film was tensioned to four sides of the sample holder and fixed, the film roughness in the central circular part was repeated 10 times in the longitudinal direction, and the center line average roughness (SRa) was obtained as the average value thereof.

A. Measurement conditions

Measurement surface treatment: Aluminum was vacuum-deposited on the measurement surface and the SRa was measured by a non-contact method.
Measurement direction: Width direction of film
Feed speed in width direction: 0.1 mm/sec
Measurement range (width direction × length direction): 1.0 mm × 0.249 mm
Reference plane of height dimension: LOWER (lower side)
Sampling interval in width direction: 2 μm
Sampling interval in length direction: 10 μm
Number of sampled parts in length direction: 25
Cut-off value: 0.25 mm
Width direction magnification: 200 times
Length direction magnification: 20,000 times
Waviness, roughness cut: None

(7) Melt flow rate (MFR)

According to JIS-K7210 (1999), the MFR was measured at a measurement temperature of 230°C under a load of 21.18 N.

(8) Melt strength (MS)

The melt strength was measured according to the apparatus for measuring MFR according to JIS-K7210 (1999). Using a melt tension tester manufactured by Toyo Seiki Co., Ltd., a polypropylene was heated to 230°C, the molten polypropylene was discharged at an extrusion speed of 15 mm/min to form a strand, and the tension when this strand was taken off at a speed of 6.5 m/min was measured as the melt strength.

(9) Cold xylene soluble component (CXS)

In 100 ml of xylene at 135°C, 0.5 g of a polypropylene film specimen was dissolved, and the solution was allowed to cool. Then, the solution was recrystallized in a thermostatic water bath at 20°C for 1 hour, and then the polypropylene component dissolved in the filtrate was quantified by liquid chromatography (X (g)). The precise amount (X0 (g)) of 0.5 g of the specimen was used to obtain the CXS value by the following expression.

$$CXS\ (\%\ by\ mass)\ =\ (X/X0)\ \times\ 100$$

(10) Electric resistance of metal film

The metal laminated film was cut into a rectangle having a longitudinal length of 10 mm and a full width (50 mm) in the width direction to prepare a specimen. The resistance of the metal film in 30 mm of the width direction was measured by the four-point probe measurement method. The measured value was multiplied by the measured width (10 mm), and the product was divided by the distance between electrodes (30 mm) to calculate the electric resistance value per 10 mm × 10 mm (unit: $\Omega/\square$).

(11) Film breakdown voltage (V/$\mu$m)

According to B method of JIS C2330 (2001) 7.4.11.2 (plate electrode method), the average value was obtained and divided by the film thickness ($\mu$m) of the measured sample measured by the micrometer method (described above). The obtained value is expressed in V/$\mu$m.

(12) Element workability at production of capacitor (element winding yield)

Aluminum was vacuum-deposited on one surface of a polypropylene film obtained in each of the examples and comparative examples described later by a vacuum deposition machine manufactured by ULVAC, Inc. so that the film resistance would be 8 $\Omega/\square$. In the vacuum deposition, aluminum was vapor-deposited in a stripe pattern having margins running in the film longitudinal direction (repetition of a deposited portion having a width of 39.0 mm and a margin having a width of 1.0 mm).

Then, slits were made with an edge in the center of each aluminum deposited portion and the center of each margin to prepare a tape-shaped winding reel having a total width of 20 mm and having margins of 0.5 mm in the left or right. Two tape-shaped winding reels each having margins on a left side or a right side were overlaid so that the aluminum deposited portion would be protruded from the margin in the width direction by 0.5 mm, and wound to give a round element having an electrostatic capacitance of about 10 $\mu$F. For element winding, KAW-4NHB manufactured by KAIDO MFG. CO., LTD. was used. During production of the capacitor, the process from the beginning of winding to the end of winding was visually observed, and those with wrinkles or misalignment were rejected. The percentage of the number of rejected products in the total number of the products was calculated and used as an index of workability (hereinafter referred to as "element winding yield"). The higher the element winding yield is, the better it is. An element having an element winding yield of 95% or more was regarded as good "A", an element having an element winding yield less than 95% and 80% or more was regarded as "B", and an element having an element winding yield less than 80% was regarded as poor "C". Those of "A" or "B" are at a practically usable level. The evaluation was made with 50 elements.

(13) High-temperature life evaluation (capacitor reliability evaluation)

Aluminum was vapor-deposited on a film obtained in each of the examples and comparative examples described later by a vacuum deposition machine manufactured by ULVAC, Inc. so that the film resistance would be 8 $\Omega/\square$ and the resulting evaporated reel would have an evaporated pattern having a so-called T-shaped margin pattern which included a margin in a direction perpendicular to the longitudinal direction. In this way, an evaporated reel having a width of 50 mm was obtained.

Then, a capacitor element was wound on the reel using an element winding machine (KAW-4NHB) manufactured by KAIDO MFG. CO., LTD., the resultant was subjected to metal spraying and then to heat treatment at a temperature of 140°C for 10 hours under a reduced pressure, and a lead wire was attached to the resultant to give a finished capacitor element. The electrostatic capacitance of the capacitor element then was 10 μF.

The electrostatic capacitance (C0) of the capacitor element thus obtained immediately after production was measured, then, a voltage of 250 VDC/μm was applied to the element in an oven at 125°C, and the electrostatic capacitance (C1) after a lapse of 200 hours was measured. The capacitance change rate (ΔC/C) was obtained by the following expression. The capacitance change rate is preferably within ±5%. The evaluation was made with 10 elements, and expressed in terms of the average value.

$$\Delta C/C\ (\%)\ =\ ((C1\ -\ C0)/C0)\ \times\ 100$$

(14) High-temperature withstand voltage

According to JIS C2330 (2001), an electrode was placed in a hot air oven controlled to 125°C, and the breakdown voltage of a biaxially oriented polypropylene film was measured. Incidentally, this measurement was carried out 5 times, and the average value was obtained and divided by the film thickness obtained as described above. In this way, the high-temperature breakdown voltage (V/μm) per 1 μm was obtained. The high-temperature withstand voltage was evaluated by evaluating the high-temperature breakdown voltage according to the following criteria.

A: 450 V/μm or more
B: 400 V/μm or more and less than 450 V/μm
C: less than 400 V/μm

Hereinafter, the effects of the present invention will be further described by way of examples.

(Example 1)

A polypropylene resin manufactured by Prime Polymer Co., Ltd. having a meso-pentad fraction of 97.9% and a melt flow rate (MFR) of 2.6 g/10 min as a linear polypropylene was fed to an extruder at a temperature of 250°C. The resin was melt-extruded in a sheet form from a T-shaped slit die at a resin temperature of 250°C, and the molten sheet was cooled and solidified on a cooling drum having a diameter of 1 m held at 90°C at an air knife temperature of 90°C and an air speed of 140 m/s. Then, the sheet was passed between rolls having a circumferential speed difference and maintained at a temperature of 145°C so that the sheet would be subjected to multi-stage stretching at a total stretch ratio of 6.5 times, that is, 5.0 times in the first time and 1.3 times in the second time in the longitudinal direction. At that time, the sheet was stretched with heat being supplemented using a radiant heater output of 4.0 kW at an orientation part in the first stage. Subsequently, the film was guided to a tenter, stretched 6.5 times in the width direction at a stretching temperature of 160°C, then heat-treated at a heat fixation temperature of 150°C and a cooling temperature of 140°C, and then quenched at room temperature for 5 seconds to give a biaxially oriented polypropylene film having a film thickness of 1.8 μm. Further, a surface of the film in contact with the cooling drum was subjected to corona discharge treatment in the atmosphere at a treatment strength of 25 W·min/m$^2$. The element workability at the time of producing a capacitor using the biaxially oriented polypropylene film thus obtained was "A", and the capacitance change rate in the capacitor reliability evaluation was -5%.

(Example 2)

A polypropylene resin manufactured by Prime Polymer Co. , Ltd. having a meso-pentad fraction of 97.9% and an MFR of 2.6 g/10 min as a linear polypropylene was fed to an extruder at a temperature of 250°C. The resin was melt-extruded in a sheet form from a T-shaped slit die at a resin temperature of 250°C, and the molten sheet was cooled and solidified on a cooling drum having a diameter of 1 m held at 90°C at an air knife temperature of 90°C and an air speed of 140 m/s. Then, the sheet was passed between rolls having a circumferential speed difference and maintained at a temperature of 148°C so that the sheet would be subjected to multi-stage stretching at a total stretch ratio of 7.0 times, that is, 5.0 times in the first time and 1.4 times in the second time in the longitudinal direction. At that time, the sheet was stretched with heat being supplemented using a radiant heater output of 7.0 kW at an orientation part in the first stage. Subsequently, the film was guided to a tenter, stretched 8.0 times in the width direction at a stretching temperature of 160°C, then heat-treated at a heat fixation temperature of 150°C and a cooling temperature of 140°C, and then quenched at room temperature for 5 seconds to give a biaxially oriented polypropylene film having a film thickness of 1.8 $\mu$m. Further, a surface of the film in contact with the cooling drum was subjected to corona discharge treatment in the atmosphere at a treatment strength of 25 W·min/m$^2$. The element workability at the time of producing a capacitor using the biaxially oriented polypropylene film thus obtained was "A", and the capacitance change rate in the capacitor reliability evaluation was -3%.

(Example 3)

A polypropylene resin manufactured by Prime Polymer Co., Ltd. having a meso-pentad fraction of 97.9% and an MFR of 2.6 g/10 min as a linear polypropylene was fed to an extruder at a temperature of 250°C. The resin was melt-extruded in a sheet form from a T-shaped slit die at a resin temperature of 250°C, and the molten sheet was cooled and solidified on a cooling drum having a diameter of 1 m held at 90°C at an air knife temperature of 90°C and an air speed of 140 m/s. Then, the sheet was passed between rolls having a circumferential speed difference and maintained at a temperature of 148°C so that the sheet would be subjected to multi-stage stretching at a total stretch ratio of 6.25 times, that is, 5.0 times in the first time and 1.25 times in the second time in the longitudinal direction. At that time, the sheet was stretched with heat being supplemented using a radiant heater output of 5.0 kW at an orientation part in the first stage. Subsequently, the film was guided to a tenter, stretched 10.0 times in the width direction at a stretching temperature of 160°C, then heat-treated at a heat fixation temperature of 150°C and a cooling temperature of 140°C, and then quenched at room temperature for 5 seconds. Then, the film was passed between rolls having a circumferential speed difference and maintained at a temperature of 150°C so that the film would be stretched again in the longitudinal direction at a stretching speed of 1, 600%/min at a stretch ratio of 1.2 times to give a biaxially oriented polypropylene film having a film thickness of 1.8 $\mu$m. Further, a surface of the film in contact with the cooling drum was subjected to corona discharge treatment in the atmosphere at a treatment strength of 25 W·min/m$^2$. The element workability at the time of producing a capacitor using the biaxially oriented polypropylene film thus obtained was "B", and the capacitance change rate in the capacitor reliability evaluation was -2%.

(Example 4)

A biaxially oriented polypropylene film having a film thickness of 1.8 $\mu$m was obtained in the same manner as in Example 1 except that the temperature of the cooling drum was 80°C. The element workability at the time of producing a capacitor using the biaxially oriented polypropylene film thus obtained was "B", and the capacitance change rate in the capacitor reliability evaluation was -4%.

(Example 5)

A biaxially oriented polypropylene film having a film thickness of 1.8 $\mu$m was obtained in the same manner as in Example 1 except that the temperature of the cooling drum was 110°C. The element workability at the time of producing a capacitor using the biaxially oriented polypropylene film thus obtained was "B", and the capacitance change rate in the capacitor reliability evaluation was -5%.

(Example 6)

A biaxially oriented polypropylene film having a film thickness of 1.8 $\mu$m was obtained in the same manner as in Example 1 except that the temperature of the cooling drum was 120°C. The element workability at the time of producing a capacitor using the biaxially oriented polypropylene film thus obtained was "B", and the capacitance change rate in the capacitor reliability evaluation was -5%.

(Example 7)

A biaxially oriented polypropylene film having a film thickness of 1.8 $\mu$m was obtained in the same manner as in Example 1 except that the first and second stretch ratios in the longitudinal direction were set to 6.0 times and 1.5 times, respectively, and the stretch ratio in the width direction was set to 9.0 times. The element workability at the time of producing a capacitor using the biaxially oriented polypropylene film thus obtained was "A", and the capacitance change rate in the capacitor reliability evaluation was -2%.

(Example 8)

A biaxially oriented polypropylene film having a film thickness of 1.8 $\mu$m was obtained in the same manner as in Example 1 except that the first and second stretch ratios in the longitudinal direction were set to 6.5 times and 1.54 times, respectively, and the stretch ratio in the width direction was set to 10.0 times. The element workability at the time of producing a capacitor using the biaxially oriented polypropylene film thus obtained was "B", and the capacitance change rate in the capacitor reliability evaluation was -1%.

(Example 9)

A biaxially oriented polypropylene film was obtained in the same manner as in Example 1 except that the melt extrusion amount was changed so that the film would have a thickness of 1.2 $\mu$m. The element workability at the time of producing a capacitor using the biaxially oriented polypropylene film thus obtained was "A", and the capacitance change rate in the capacitor reliability evaluation was -5%.

(Example 10)

A biaxially oriented polypropylene film was obtained in the same manner as in Example 1 except that the melt extrusion amount was changed so that the film would have a thickness of 1.0 $\mu$m. The element workability at the time of producing a capacitor using the biaxially oriented polypropylene film thus obtained was "B", and the capacitance change rate in the capacitor reliability evaluation was -4%.

(Example 11)

A biaxially oriented polypropylene film was obtained in the same manner as in Example 1 except that the melt extrusion amount was changed so that the film would have a thickness of 0.5 $\mu$m. The element workability at the time of producing a capacitor using the biaxially oriented polypropylene film thus obtained was "B", and the capacitance change rate in the capacitor reliability evaluation was -4%.

(Example 12)

A biaxially oriented polypropylene film was obtained in the same manner as in Example 1 except that the melt extrusion amount was changed so that the film would have a thickness of 2.5 $\mu$m. The element workability at the time of producing a capacitor using the biaxially oriented polypropylene film thus obtained was "B", and the capacitance change rate in the capacitor reliability evaluation was -5%.

(Example 13)

A biaxially oriented polypropylene film was obtained in the same manner as in Example 1 except that the melt extrusion amount was changed so that the film would have a thickness of 3.0 $\mu$m. The element workability at the time of producing a capacitor using the biaxially oriented polypropylene film thus obtained was "B", and the capacitance change rate in the capacitor reliability evaluation was -5%.

(Comparative Example 1)

A polypropylene resin manufactured by Prime Polymer Co., Ltd. having a meso-pentad fraction of 97.9% and an MFR of 2.6 g/10 min as a polypropylene was fed to an extruder at a temperature of 250°C. The resin was melt-extruded in a sheet form from a T-shaped slit die at a resin temperature of 250°C, and the molten sheet was cooled and solidified on a cooling drum having a diameter of 1 m held at 90°C at an air knife temperature of 90°C and an air speed of 140 m/s. Then, the sheet was passed between rolls having a circumferential speed difference and maintained at a temperature of 145°C so that the sheet would be subjected to single-stage stretching at a stretch ratio of 5.0 times in the first time in the longitudinal direction. Subsequently, the film was guided to a tenter, stretched 10.0 times in the width direction at a stretching temperature of 160°C, then heat-treated at a heat fixation temperature of 150°C and a cooling temperature of 140°C, and then quenched at room temperature for 5 seconds to give a biaxially oriented polypropylene film having a film thickness of 1.8 $\mu$m. Further, a surface of the film in contact with the cooling drum was subjected to corona discharge treatment in the atmosphere at a treatment strength of 25 W·min/m$^2$. The element workability at the time of producing a capacitor using the biaxially oriented polypropylene film thus obtained was "C", and the capacitance change rate in the capacitor reliability evaluation was -6%.

(Comparative Example 2)

A biaxially oriented polypropylene film having a film thickness of 1.8 $\mu$m was obtained in the same manner as in Example 1 except that the temperature of the cooling drum was 70°C. The element workability at the time of producing a capacitor using the biaxially oriented polypropylene film thus obtained was "C", and the capacitance change rate in the capacitor reliability evaluation was -4%.

(Comparative Example 3)

An attempt was made to obtain a biaxially oriented polypropylene film in the same manner as in Example 1 except that the stretching temperature in the longitudinal direction was 128°C. As a result, film rupture frequently occurred, and no biaxially oriented polypropylene film was obtained.

(Comparative Example 4)

An attempt was made to obtain a biaxially oriented polypropylene film in the same manner as in Example 1 except that the output of the radiant heater was set to 0 kW at the time of stretching in the longitudinal direction. As a result, film rupture frequently occurred, and no biaxially oriented polypropylene film was obtained.

(Comparative Example 5)

An attempt was made to obtain a biaxially oriented polypropylene film in the same manner as in Example 1 except that the film was stretched at a stretch ratio of 6.5 times at once without being subjected to multi-stage stretching in the longitudinal direction. As a result, film rupture frequently occurred, and no biaxially oriented polypropylene film was obtained.

(Comparative Example 6)

A biaxially oriented polypropylene film having a film thickness of 1.8 $\mu$m was obtained in the same manner as in Example 1 except that the film was stretched at a stretch ratio of 5.5 times at once without being subjected to multi-stage stretching in the longitudinal direction, and the stretch ratio in the width direction was set to 7.5 times. The element workability at the time of producing a capacitor using the biaxially oriented polypropylene film thus obtained was "C", and the capacitance change rate in the capacitor reliability evaluation was -3%.

(Comparative Example 7)

An attempt was made to obtain a biaxially oriented polypropylene film in the same manner as in Example 1 except that the first and second stretch ratios in the longitudinal direction were set to 3.5 times and 1.86 times, respectively. As a result, film rupture frequently occurred, and no biaxially oriented polypropylene film was obtained.

(Comparative Example 8)

A biaxially oriented polypropylene film was obtained in the same manner as in Example 1 except that the melt extrusion amount was changed so that the film would have a thickness of 0.4 $\mu$m. The element workability at the time of producing a capacitor using the biaxially oriented polypropylene film thus obtained was "C", and the capacitance change rate in the capacitor reliability evaluation was -8%.

(Comparative Example 9)

A biaxially oriented polypropylene film was obtained in the same manner as in Example 1 except that the melt extrusion amount was changed so that the film would have a thickness of 3.1 $\mu$m. The element workability at the time of producing a capacitor using the biaxially oriented polypropylene film thus obtained was "B", and the capacitance change rate in the capacitor reliability evaluation was -6%.

[Table 1]

| | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|
| Total longitudinal stretch ratio | times | 6.5 | 7.0 | 7.5 | 6.5 | 6.5 | 6.5 | 9.0 | 10.0 | 6.5 | 6.5 | 6.5 | 6.5 | 6.5 |
| Longitudinal stretch ratio | times | 6.5 (5×1.3) | 7.0 (5×1.4) | 6.25(5×1.25) | 6.5 (5×1.3) | 6.5 (5×1.3) | 6.5 (5×1.3) | 9.0 (6×1.5) | 10.0 (6.5×1.54) | 6.5 (5×1.3) | 6.5 (5×1.3) | 6.5 (5×1.3) | 6.5 (5×1.3) | 6.5 (5×1.3) |
| Transverse stretch ratio | times | 6.5 | 8.0 | 10 | 6.5 | 6.5 | 6.5 | 9.0 | 10 | 6.5 | 6.5 | 6.5 | 6.5 | 6.5 |
| Re-longitudinal stretch ratio | times | - | - | 1.2 | - | - | - | - | - | - | - | - | - | - |
| Total longitudinal stretch ratio/ total transverse stretch ratio | - | 1.0 | 0.88 | 0.75 | 1.0 | 1.0 | 1.0 | 1.0 | 1.0 | 1.0 | 1.0 | 1.0 | 1.0 | 1.0 |
| Area ratio | times | 42 | 56 | 75 | 42 | 42 | 42 | 81 | 100 | 42 | 42 | 42 | 42 | 42 |
| Film thickness | μm | 1.8 | 1.8 | 1.8 | 1.8 | 1.8 | 1.8 | 1.8 | 1.8 | 1.2 | 1.0 | 0.5 | 2.5 | 3.0 |
| $\mu dm$ | - | 0.92 | 0.90 | 0.99 | 1.15 | 0.75 | 0.71 | 0.88 | 0.83 | 1.06 | 1.26 | 1.65 | 0.79 | 0.68 |
| $\mu dt$ | - | 0.94 | 1.09 | 1.31 | 1.17 | 0.78 | 0.73 | 1.00 | 0.99 | 1.08 | 1.29 | 1.68 | 0.81 | 0.71 |
| $\mu dm/\mu dt$ | - | 0.98 | 0.85 | 0.76 | 0.98 | 0.96 | 0.97 | 0.88 | 0.84 | 0.98 | 0.98 | 0.98 | 0.98 | 0.96 |
| $Y_{MD}$ | GPa | 3.3 | 3.4 | 3.5 | 3.3 | 3.3 | 3.3 | 4.1 | 4.6 | 3.3 | 3.3 | 3.3 | 3.3 | 3.3 |
| $Y_{TD}$ | GPa | 3.4 | 3.6 | 4.1 | 3.4 | 3.4 | 3.4 | 4.5 | 5.2 | 3.4 | 3.4 | 3.4 | 3.4 | 3.4 |
| $Y_{45°}$ | GPa | 3.3 | 3.8 | 3.9 | 3.3 | 3.3 | 3.3 | 4.3 | 4.9 | 3.3 | 3.3 | 3.3 | 3.3 | 3.3 |
| $Y_{MD}/Y_{TD}$ | - | 0.97 | 0.94 | 0.85 | 0.97 | 0.97 | 0.97 | 0.91 | 0.88 | 0.97 | 0.97 | 0.97 | 0.97 | 0.97 |
| $Y_{TD}/Y_{45°}$ | - | 1.03 | 0.95 | 1.05 | 1.03 | 1.03 | 1.03 | 1.05 | 1.06 | 1.03 | 1.03 | 1.03 | 1.03 | 1.03 |
| $Y_{45°}/Y_{MD}$ | - | 1.00 | 1.12 | 1.11 | 1.00 | 1.00 | 1.00 | 1.05 | 1.07 | 1.00 | 1.00 | 1.00 | 1.00 | 1.00 |

(continued)

| | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|
| Element workability | | A | A | B | B | B | B | A | B | A | B | B | B | B |
| Capacitance change rate | % | -5 | -3 | -2 | -4 | -5 | -5 | -2 | -1 | -5 | -4 | -4 | -5 | -5 |
| High-temperature withstand voltage | | A | B | B | A | A | A | B | B | A | A | B | A | B |
| Center line surface roughness (Surface in contact with cooling drum) | nm | 31 | 29 | 30 | 25 | 34 | 38 | 28 | 26 | 27 | 21 | 16 | 34 | 39 |
| Center line surface roughness (Surface not in contact with cooling drum) | nm | 22 | 21 | 23 | 18 | 25 | 26 | 23 | 22 | 20 | 15 | 11 | 26 | 28 |

[Table 2]

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|
| Total longitudinal stretch ratio | times | 5.0 | 6.5 | 6.5 | 6.5 | 6.5 | 5.5 | 6.5 | 6.5 | 6.5 |
| Longitudinal stretch ratio | times | 5.0 | 6.5 (5 × 1.3) | 6.5 (5 × 1.3) | 6.5 (5 × 1.3) | 6.5 | 5.5 | 6.5 (3.5 × 1.86) | 6.5 (5 × 1.3) | 6.5 (5 × 1.3) |
| Transverse stretch ratio | times | 10 | 6.5 | 6.5 | 6.5 | 6.5 | 7.5 | 6.5 | 6.5 | 6.5 |
| Re-longitudinal stretch ratio | times | - | - | - | - | - | - | - | - | - |
| Total longitudinal stretch ratio/ total transverse stretch ratio | - | 0.50 | 1.0 | 1.0 | 1.0 | 1.0 | 0.73 | 1.0 | 1.0 | 1.0 |
| Area ratio | times | 50 | 42 | 42 | 42 | 42 | 41 | 42 | 42 | 42 |
| Film thickness | $\mu$m | 1.8 | 1.8 | - | - | - | 1.8 | - | 0.4 | 3.1 |
| $\mu$dm | - | 0.85 | 1.75 | - | - | - | 0.88 | - | 1.69 | 0.67 |
| $\mu$dt | - | 1.38 | 1.80 | - | - | - | 1.26 | - | 1.72 | 0.70 |
| $\mu$dm/$\mu$dt | - | 0.62 | 0.97 | - | - | - | 0.70 | - | 0.98 | 0.96 |
| $Y_{MD}$ | GPa | 2.9 | 3.3 | - | - | - | 3.0 | - | 3.3 | 3.3 |
| $Y_{TD}$ | GPa | 4.7 | 3.4 | - | - | - | 4.2 | - | 3.4 | 3.4 |
| $Y_{45°}$ | GPa | 3.9 | 3.3 | - | - | - | 3.6 | - | 3.3 | 3.3 |
| $Y_{MD}/Y_{TD}$ | - | 0.62 | 0.97 | - | - | - | 0.71 | - | 0.97 | 0.97 |
| $Y_{TD}/Y_{45°}$ | - | 1.21 | 1.03 | - | - | - | 1.17 | - | 1.03 | 1.03 |
| $Y_{45°}/Y_{MD}$ | - | 1.34 | 1.00 | - | - | - | 1.20 | - | 1.00 | 1.00 |
| Element workability | | C | C | - | - | - | C | - | C | B |

(continued)

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|
| Capacitance change rate | % | -6 | -4 | - | - | - | -3 | - | -8 | -6 |
| High-temperature withstand voltage | | C | A | | | | C | | C | C |
| Center line surface roughness (Surface in contact with cooling drum) | nm | 42 | 13 | - | - | - | 29 | - | 12 | 41 |
| Center line surface roughness (Surface not in contact with cooling drum) | nm | 28 | 9 | - | - | - | 24 | - | 9 | 30 |

## Claims

1. A biaxially oriented polypropylene film for a capacitor, in which $\mu$dm and $\mu$dt are each in the range of 0.60 - 1.70 and the value of the ratio ($\mu$dm/$\mu$dt) of $\mu$dm and $\mu$dt is 0.75 to less than 1.15, wherein $\mu$dm is the kinetic friction coefficient in a longitudinal direction and $\mu$dt is the kinetic friction coefficient in a width direction, which kinetic friction coefficients are measured in accordance with JIS-K7125 (1999), and the film thickness measured by a micrometer method is in the range of 0.5 - 3 $\mu$m.

2. The biaxially oriented polypropylene film for a capacitor according to claim 1, wherein $Y_{MD}$, $Y_{TD}$, and $Y_{45°}$ satisfy the following expressions (a) to (c), where $Y_{MD}$ is a Young's modulus in the film longitudinal direction, $Y_{TD}$ is a Young's modulus in the film width direction, and $Y_{45°}$ is a Young's modulus in a direction of 45° which is a bisector between the longitudinal direction and the width direction:

$$0.8 < Y_{MD}/Y_{TD} < 1.25 \quad \ldots (a)$$

$$0.8 < Y_{TD}/Y_{45°} < 1.25 \quad \ldots (b)$$

$$0.8 < Y_{45°}/Y_{MD} < 1.25 \quad \ldots (c).$$

3. The biaxially oriented polypropylene film for a capacitor according to claim 1 or 2, wherein $Y_{45°}$ is 2.5 GPa or more and 5.0 GPa or less, where $Y_{45°}$ is a Young's modulus in a direction of 45° which is a bisector between the film longitudinal direction and the film width direction.

4. The biaxially oriented polypropylene film for a capacitor according to any one of claims 1 to 3, comprising a polypropylene having a meso-pentad fraction of 95% or more and 99% or less.

5. The biaxially oriented polypropylene film for a capacitor according to any one of claims 1 to 4, having a center line surface roughness (SRa) of 10 nm or more and 40 nm or less in either surface.

6. A metal laminated film comprising the biaxially oriented polypropylene film for a capacitor according to any one of claims 1 to 5, and a metal film provided on at least one surface of the biaxially oriented polypropylene film.

7. The metal laminated film according to claim 6, wherein the metal film has a surface electric resistance value in a range of 1 to 20 $\Omega/\square$.

8. A film capacitor comprising the metal laminated film according to claim 6 or 7.


## Patentansprüche

1. Biaxial gereckte Polypropylenfolie für einen Kondensator, in dem $\mu$dm und $\mu$dt jeweils im Bereich von 0,60 bis 1,70 liegen und der Wert des Verhältnisses ($\mu$dm/$\mu$dt) zwischen $\mu$dm und $\mu$dt 0,75 bis weniger als 1,15 beträgt, wobei $\mu$dm der kinetische Reibungskoeffizient in Längsrichtung und $\mu$dt der kinetische Reibungskoeffizient in Breitenrichtung ist, wobei die kinetischen Reibungskoeffizienten gemäß JIS-K7125 (1999) gemessen werden, und die mittels eines Mikrometerverfahrens gemessen Dicke der Folie im Bereich von 0,5 bis 3 $\mu$m liegt.

2. Biaxial gereckte Polypropylenfolie für einen Kondensator nach Anspruch 1, wobei $Y_{MD}$, $Y_{TD}$ und $Y_{45°}$ die folgenden Ausdrücke (a) bis (c) erfüllen, wobei $Y_{MD}$ der Elastizitätsmodul in Folienlängsrichtung ist, $Y_{TD}$ der Elastizitätsmodul in Folienbreitenrichtung ist und $Y_{45°}$ der Elastizitätsmodul in 45°-Richtung ist, die die Halbierende zwischen der Längsrichtung und der Breitenrichtung ist:

$$0,8 < Y_{MD}/Y_{TD} < 1,25 \ \ldots (a)$$

$$0,8 < Y_{TD}/Y_{45°} < 1,25 \ ... \ (b)$$

$$0,8 < Y_{45°}/Y_{MD} < 1,25 \ ... \ (c).$$

**3.** Biaxial gereckte Polypropylenfolie für einen Kondensator nach Anspruch 1 oder 2, wobei $Y_{45°}$ 2,5 GPa oder mehr und 5,0 GPa oder weniger ist, wobei $Y_{45°}$ der Elastizitätsmodul in 45°-Richtung ist, die die Halbierende zwischen der Längsrichtung und der Breitenrichtung ist.

**4.** Biaxial gereckte Polypropylenfolie für einen Kondensator nach einem der Ansprüche 1 bis 3, die Polypropylen mit einem Meso-Pentaden-Anteil von 95 % oder mehr und 99 % oder weniger umfasst.

**5.** Biaxial gereckte Polypropylenfolie für einen Kondensator nach einem der Ansprüche 1 bis 4 mit einer Mittellinien-Oberflächenrauhigkeit (SRa) von 10 nm oder mehr und 40 nm oder weniger auf beiden Oberflächen.

**6.** Laminierte Metallfolie, die eine biaxial gereckte Polypropylenfolie für einen Kondensator nach einem der Ansprüche 1 bis 5 und eine Metallfolie umfasst, die auf zumindest einer Oberfläche der biaxial gereckten Polypropylenfolie vorgesehen ist.

**7.** Laminierte Metallfolie nach Anspruch 6, wobei die Metallfolie einen elektrischen Oberflächenwiderstandswert im Bereich von 1 bis 20 $\Omega/\square$ aufweist.

**8.** Folienkondensator, der eine laminierte Metallfolie nach Anspruch 6 oder 7 umfasst.


## Revendications

**1.** Film de polypropylène à orientation biaxiale pour un condensateur, dans lequel $\mu dm$ et $\mu dt$ sont chacun dans la plage de 0,60 à 1,70 et la valeur du rapport ($\mu dm/\mu dt$) de $\mu dm$ et $\mu dt$ est de 0,75 à moins de 1,15, dans lequel $\mu dm$ est le coefficient de friction cinétique dans une direction longitudinale et $\mu dt$ est le coefficient de friction cinétique dans une direction de la largeur, lesquels coefficients de friction cinétiques sont mesurés conformément à JIS-K7125 (1999),
et l'épaisseur du film mesurée par un procédé micrométrique est dans la plage de 0,5 à 3 $\mu m$.

**2.** Film de polypropylène à orientation biaxiale pour un condensateur selon la revendication 1, dans lequel $Y_{MD}$, $Y_{TD}$ et $Y_{45°}$ satisfont les expressions (a) à (c) suivantes, où $Y_{MD}$ est un module de Young dans la direction longitudinale du film, $Y_{TD}$ est un module de Young dans la direction de la largeur du film et $Y_{45°}$ est un module de Young dans une direction de 45° qui est une bissectrice entre la direction longitudinale et la direction de la largeur :

$$0,8 < Y_{MD}/Y_{TD} < 1,25 \qquad ... \ (a)$$

$$0,8 < Y_{TD}/Y_{45°} < 1,25 \qquad ... \ (b)$$

$$0,8 < Y_{45°}/Y_{MD} < 1,25 \qquad ... \ (c)$$

**3.** Film de polypropylène à orientation biaxiale pour un condensateur selon la revendication 1 ou 2, dans lequel $Y_{45°}$ est de 2,5 GPa ou plus et de 5,0 GPa ou moins, où $Y_{45°}$ est un module de Young dans une direction de 45° qui est une bissectrice entre la direction longitudinale du film et la direction de la largeur du film.

**4.** Film de polypropylène à orientation biaxiale pour un condensateur selon l'une quelconque des revendications 1 à 3, comprenant un polypropylène ayant une fraction méso-pentade de 95 % ou plus et de 99 % ou moins.

**5.** Film de polypropylène à orientation biaxiale pour un condensateur selon l'une quelconque des revendications 1 à 4, ayant une rugosité de surface de ligne médiane (Sra) de 10 nm ou plus et de 40 nm ou moins dans chaque surface.

6. Film métallique stratifié comprenant le film de polypropylène à orientation biaxiale pour un condensateur selon l'une quelconque des revendications 1 à 5, et un film métallique prévu sur au moins une surface du film de polypropylène à orientation biaxiale.

7. Film métallique stratifié selon la revendication 6, dans lequel le film métallique a une valeur de résistance électrique superficielle dans une plage de 1 à 20 Ω/□.

8. Condensateur à film comprenant le film métallique stratifié selon la revendication 6 ou 7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 51063500 A
- JP 2004175932 A
- JP 2001129944 A
- JP 2001072778 A
- JP 3508515 B
- JP 2007308604 A
- JP 2008030223 A
- JP 2000025107 A
- US 3309452 A
- JP 62121704 A
- JP 2869606 B

### Non-patent literature cited in the description

- Polymer Analysis Handbook. THE JAPAN SOCIETY FOR ANALYTICAL CHEMISTRY, 1995, 609-611